# EUROPEAN PATENT SPECIFICATION

(11) **EP 0 809 344 B1**
(45) Date of publication and mention of the grant of the patent: **03.11.1999**
(21) Application number: 97106812.7
(22) Date of filing: 24.04.1997
(51) Int. Cl.: H02K 13/08

(54) **Electric rotating machine using coil ends as a commutator**
Elektrisch drehende Maschine mit Spulenden als Kommutator
Machine électrique tournante utilisant les extremités du bobinage comme commutateur

(30) Priority: 20.05.1996 JP 12415396
(43) Date of publication of application: 26.11.1997
(73) Proprietor: DENSO CORPORATION, Kariya-City Aichi-Pref. 448 (JP)
(72) Inventor: Katoh, Masahiro, Kariya-city Aichi-pref. 448 (JP); Niimi, Masami, Kariya-city Aichi-pref. 448 (JP)
(74) Representative: Winter, Brandl, Fürniss, Hübner, Röss, Kaiser, Polte, Kindermann Partnerschaft

(56) References cited:
- EP-A- 0 387 666
- EP-A- 0 649 213
- US-A- 4 912 352

## Description

### BACKGROUND OF THR INVENTION

### 1. Field of the Invention:

The present invention relates to a commutator type electric rotating machine which is preferably used for a starter.

### 2. Related Art:

An electric motor in which a part of an armature coil is used as a commutator is hitherto proposed in Japanese Patent Publication Laid-open No. 2-241346. This motor has its commutator surface extending axially. Therefore, an armature including the commutator has a low centrifugal force-resistant strength (centrifugal force-resistant performance) and is thus incapable of withstanding high-speed rotations.

In order to solve this problem, it is proposed in United States patent No. 5,508,577 that an armature has upper-layer coil ends which extend to the inner peripheral side of an armature core along an axial end surface thereof and are used as a commutator. Because the commutator surface of the armature extend radially and the axial length of the armature core is thus shortened, the commutator has a higher degree of centrifugal force-resistant strength and thus the armature is capable of withstanding high-speed rotations.

In order to apply the armature having this type of commutator to a starter for an engine having a large displacement without making the size of the motor large, it is necessary to design the motor to have a high output by providing it with a high speed reduction ratio. As the higher reduction ratio requires higher speed rotation of the armature, the centrifugal force resitant strength must be improved more. In the armature having a construction of holding the upper-layer coil ends by only the pressing force of a collar acting in the axial direction of the armature core in resistance to the centrifugal force applied to the upper-layer coil ends, the pressing force of the collar may be insufficient to suppress coil end movement caused by the force applied radially outwardly. Consequently, it will occur that when the upper-layer coil ends serving as the commutator are moved and dislocated from the respective predetermined positions, the respective intervals between the adjacent upper-layer coil ends in the circumferential direction of the armature core become unequal to each other, which would degrade performance in output and commutation.

### SUMMARY OF THE INVENTION

The present invention therefore has an object to provide an electric rotating machine which has a high degree of centrifugal force-resistant strength to prevent the dislocation of upper-layer coil ends serving as a commutator.

This object is achieved with an electric machine as claimed in claim 1.

According to the present invention, an annular member is engaged with outer peripheries of projections of upper-layer coil ends connected with projections of lower-layer coil ends. When a centrifugal force is applied to the upper-layer coil ends, the annular member restricts the dislocation of a connection portion at which the projections of the lower-layer coil ends and the projections of the upper-layer coil ends are connected. Thus, the upper-layer coil ends can be prevented from being dislocated outward in the radial direction of an armature core, and hence the electric rotating machine has an improved centrifugal force-resistant performance.

Preferably, concaves and convexes are formed on the inner peripheral surface of the annular member to engage the connection portion between the projections of the lower-layer coil ends and the upper-layer coil ends. Thus, the movement of the connection portion in the circumferential direction of the armature core as well as in the radial direction thereof can be prevented. The respective intervals between the adjacent two of the upper-layer coil ends in the circumferential direction of the armature core can be kept to be equal to each other.

Preferably, projections are formed on the annular member and inserted into gaps between the adjacent two of the upper-layer coil ends to place the upper-layer coil ends in position. In addition to the prevention of the dislocation of the connection portion, the positioning of the upper-layer coil ends can be accomplished.

Preferably, a collar is fitted to hold the annular member so that the upper-layer coil ends and the lower-layer coil ends can be prevented from removed from axial end surface of the armature core.

Preferably, the collar is made made resiliently to hold the annular member in a state in which the annular member is pressed against the upper-layer coil ends. Thus, the upper-layer coil ends can be held by the collar with a higher degree of strength.

### BRIEF DESCRIPTION OF THE DRAWINGS

Other objects, features and advantages of the present invention will become more apparent from the following detailed description when read with reference to the accompanying drawings, in which:
Fig. 1 is a partial sectional view showing an electric rotating machine according to an embodiment of the present invention;
Fig. 2 is a plan view showing an axial side of an armature used in the embodiment shown in Fig. 1;
Fig. 3 is a plan view showing an insulation ring used in the embodiment shown in Fig. 1; and
Fig. 4 is a sectional view showing a pressing collar used in the embodiment shown in Fig. 1.

### DETAILED DESCRIPTION OF A PRESENTLY PREFERRED EMBODIMENT

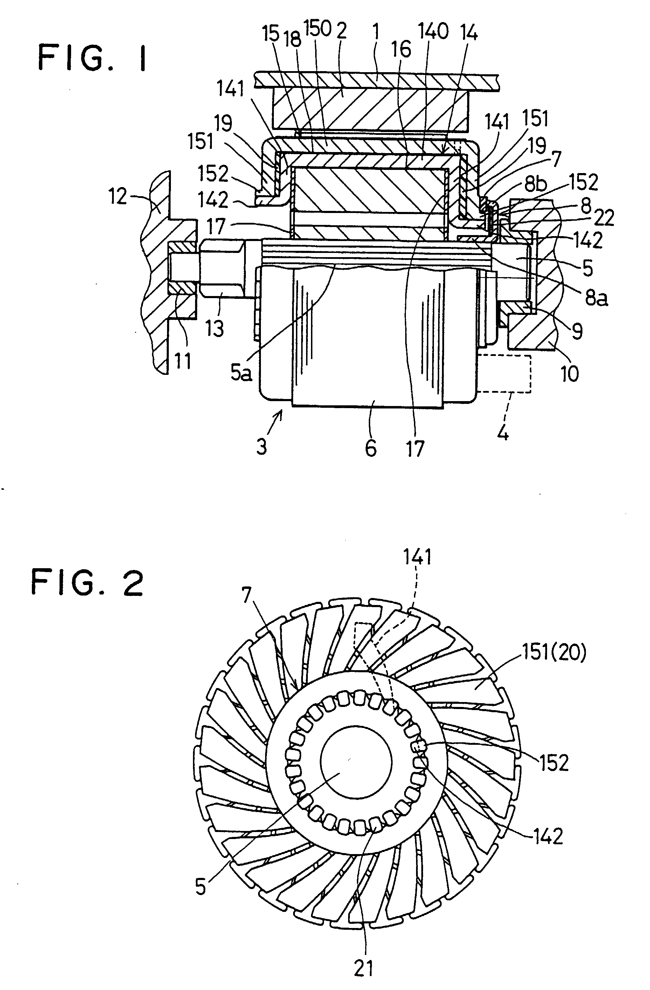

An electric rotating machine according to the present invention will be described below with reference to Figs. 1 through 4.

The electric rotating machine according to an embodiment is used as a starter motor for a starter having a speed reduction gear mechanism. The starter motor comprises a yoke 1, a field device 2, an armature 3, and brushes 4. Because the construction of these members except that of the armature 3 are well known, the descriptions thereof are omitted herein. The armature 3 comprises a shaft 5, an armature core 6, an armature winding (described later), an annular insulation ring 7, and a pressing collar 8.

One axial end of the shaft 5 is rotatably supported by an end cover 10 through a bearing 9, and the other axial end thereof is rotatably supported by an output shaft 12 through a bearing 11. A sun gear 13 of a planetary speed reduction gear mechanism is formed on the outer peripheral surface of the shaft 5 at the other axial end thereof.

The armature core 6 is constituted by a plurality of laminated thin steel plates punched in the shape of a disc by a pressing machine and fixed to the shaft 5 by engaging it with a serration 5a formed on the outer periphery of the shaft 5. A predetermined number of slots (not shown) is formed concavely on the periphery of the armature core 6 in the axial direction thereof such that the slots are spaced at regular angular intervals in the circumferential direction thereof.

The armature winding comprises a plurality (for example, 25) of lower-layer coil bars 14 and upper-layer coil bars 15. Each lower-layer coil bar 14 comprises a lower-layer coil trunk 140 which is accommodated inside corresponding one of the slots of the armature core 6 through a lower-layer coil insulation material 16; and a lower-layer coil end 141 formed by bending the bar substantially perpendicularly to the lower-layer coil trunk 140. The lower-layer coil end 141 extends from both axial ends of the lower-layer coil trunk 140 toward the inner peripheral side of the armature core 6 along an axial end surface of the armature core 6. The lower-layer coil end 141 has a projection (lower-layer coil projection) 142 formed by bending the coil end perpendicularly so that the lower-layer coil projection 142 extends in the axial direction of the armature core 6 from both ends of the lower-layer coil end 141 located at the inner peripheral side of the armature core 6. The lower-layer coil end 141 extends not in the radial direction of the armature core 6, but in the generally spiral direction as shown in Fig. 2.

An insulation plate 17 made of nylon, phenol resin or the like for electrically insulating the axial end surface of the armature core 6 and the respective lower-layer coil ends 141 from each other is interposed therebetween.

The upper-layer coil bar 15 comprises an upper-layer coil trunk 150 accommodated inside corresponding one of the slots of the armature core 6 such that the upper-layer coil trunk 150 is positioned over the lower-layer coil trunk 140 through an upper-layer coil insulation material 18; and an upper-layer coil end 151 formed by bending the bar substantially perpendicularly to the upper-layer coil trunk 150 to extend from both axial ends of the upper-layer coil trunk 150 toward the inner peripheral side of the armature core 6 along the lower-layer coil end 141. The upper-layer coil end 151 has a projection (upper-layer coil projection) 152 formed by bending perpendicularly to the upper-layer coil end 151 to extend in the axial direction of the armature core 6 from both ends of the upper-layer coil end 151 located at the inner peripheral side of the armature core 6. The upper-layer coil projection 152 and the lower-layer coil projection 142 are electrically connected with each other by welding or the like. The upper-layer coil end 151 extends not in the radial direction of the armature core 6 but in the generally spiral direction as shown in Fig. 2. More specifically, the upper-layer coil end 151 extends in the direction opposite to the direction in which the lower-layer coil end 141 extends.

An insulation plate 19 made of nylon, phenol resin or the like for electrically insulating each lower-layer coil end 141 and each upper-layer coil end 151 from each other is interposed therebetween.

The lower-layer coil end 141 and the upper-layer coil end 151 positioned at one axial side (right-hand side in Fig. 1) in the axial direction of the armature core 6 are longer than each of the lower-layer coil end 141 and the upper-layer coil end 151 positioned at the other axial side (left-hand side in Fig. 1) in the axial direction thereof. The longer upper-layer coil ends 151 (i.e., the upper-layer coil end 151 positioned at one side in the axial direction of the armature core 6) is used as a commutator 20 (Fig. 2), and brushes 4 are in contact with the surface of the commutator 20.

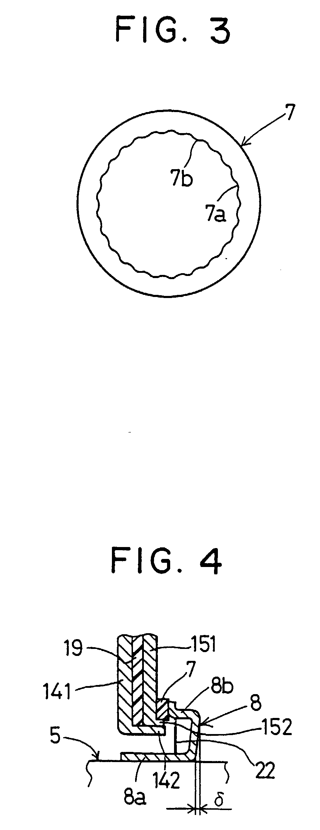

The insulation ring 7 is made of phenol resin or the like containing glass fiber and engages the periphery of the upper-layer coil projection 152 positioned at one side in the axial direction of the armature core 6. Concaves 7a and convexes 7b (Fig. 3) are formed on the entire inner peripheral surface of the insulation ring 7. The inner periphery of the concave 7a is engaged by the periphery of the upper-layer coil projection 152 to prevent the dislocation of a connection portion 21 at which the upper-layer coil projection 152 and the lower-layer coil projection 142 are connected with each other (Fig. 2.)

The pressing collar 8 is an annular member comprising an inner cylindrical portion 8a and an outer cylindrical portion 8b. The inner cylindrical portion 8a is fitted onto the outer periphery of the shaft 5 under pressure, and the leading end surface of the outer cylindrical portion 8b holds the end surface of the insulating ring 7 positioned opposite to the end surface at the side of the upper-layer coil end 151.

An insulation plate 22 made of paper or the like is provided for electrically insulating the connection portion 21 and the pressing collar 8 from each other.

In operation, when the centrifugal force is applied to the upper-layer coil end 151 by the rotation of the armature 3, a force is radially outwardly applied to the upper-layer coil end 151. Because in this embodiment, the insulation ring 7 is in engagement with the outer periphery of the upper-layer coil projection 152 and suppresses radially outward movement of the projection, the radial outward movement of the coil end 151 can be suppressed. Owing to this, the armature 3 has an improved centrifugal force-resistant performance, thus withstanding a high-speed rotation. Therefore, the armature 3 is applicable to an engine starter having a large displacement.

Further, the insulation ring 7 has the concaves 7a and convexes 7b formed alternately on the entire inner peripheral surface thereof, and the inner periphery of the concave 7a is engaged by the outer periphery of the upper-layer coil projection 152. Therefore, the connection portion 21 at which the lower-layer coil projection 142 and the upper-layer coil projection 152 are connected with each other can be placed in position in the circumferential direction of the armature core 6. This prevents the movement of the connection portion 21 in the circumferential direction of the armature core 6 as well as the radial direction thereof. Thus, the respective intervals between the adjacent upper-layer coil ends 151 which are used as the commutator 20 can be kept to be equal to each other. Consequently, stable output and commutation performance can be obtained and thus a reliable electric rotating machine can be provided.

Because the insulation ring 7 is held by the pressing collar 8, the removal of the insulation ring 7 is prevented during the rotation of the armature 3.

Although in the above-described embodiment the insulation ring 7 is held by the pressing collar 8, the pressing color 8 may be deformed by δ (Fig. 4) to hold the insulation ring 7 thereby, with the pressing color 8 pressing the insulation ring 7 against the upper-layer coil end 151. In this manner, the upper-layer coil end 151 can be held with a higher degree of strength.

The positioning of the upper-layer coil ends 151 can be accomplished by inserting projections projecting toward one end surface of the armature core 6 formed on the insulation ring 7 into the respective gaps between the upper-layer coil ends 151 adjacent to each other in the circumferential direction of the armature core 6. In this case, when the centrifugal force is applied to the upper-layer coil ends 151, the projections are capable of suppressing a radial movemen of the coil ends 151 against the force applied radially outwardly.

Although in this embodiment the insulation ring 7 and the pressing collar 8 are used at only one side in the axial direction of the armature core 6, they may be also used at the other side in the axial direction thereof to improve the centrifugal force-resistant performance of the armature 3. The provision of the pressing collar 8 may be omitted if the movement of the insulation ring 7 will not occur, for example, the insulation ring 7 is bonded to the upper-layer coil end 151 or pressed into the periphery of the upper-layer coil projection 152 under pressure.

As the insulation ring 7, a metal plate whose surface is insulation-treated may be used.

## Claims

1. An electric rotating machine comprising:
a shaft (5) supported rotatably;
an armature core (6) fixed to the shaft and having a plurality of slots on an outer periphery thereof;
a plurality of lower-layer coil trunks (140) accommodated in the slots respectively;
a plurality of lower-layer coil ends (141) extending radially from one ends of the lower-layer coil trunks respectively to an inner peripheral side of the armature core along one axial end surface of the armature core and having respective projections (142) extending in the axial direction of the armature core from radially inner ends of the lower-layer coil ends;
a plurality of upper-layer coil trunks (150) accommodated in the slots respectively and located over the lower-layer coil trunks respectively;
a plurality of upper-layer coil ends (151) extending radially from one ends of the upper-layer coil trunks respectively to the inner peripheral side of the armature core along the lower-layer coil ends and having respective projections (152) extending in the axial direction of the armature core from radially inner ends of the upper-layer coil ends;
the projections of the respective lower-layer coil ends and the projections of the respective upper-layer coil ends being electrically connected to form an armature winding; and
an annular member (7) engaged with outer peripheries of the projections of the upper-layer coil ends to restrict a connection portion (21) between the projections of the lower-layer coil ends and the upper-layer coil ends from dislocating outward in the radial direction of the armature core,
wherein the annular member (7) has, on an inner periphery thereof, concaves (7a) and convexes (7b) for positioning the connection portion (21) in the circumferential direction of the armature core (6).

2. The electric rotating machine according to claim 1, wherein the concaves (7a) and the convexes (7b) are formed on the entire inner peripheral surface of the annular member (7).

3. The electric rotating machine according to claim 1 or 2, wherein:
the annular member (7) has a plurality of projections projecting toward the one axial end surface of the armature core and inserted into gaps between adjacent two of the upper-layer coil ends in the circumferential direction of the armature core to place the upper-layer coil ends in position.

4. The electric rotating machine according to any one of claims 1 through 3, further comprising:
a collar (8) holding the annular member.

5. The electric rotating machine according to claim 4, wherein:
the collar (8) holds the annular member in a state in which the annular member is pressed against the upper-layer coil ends.

6. The electric rotating machine according to any one of claims 1 through 5, further comprising:
a brush (4) provided radially outside the annular member in slidable contact with the upper-layer coil ends for commutation of electric power.

## Patentansprüche

1. Eine elektrische Antriebsmaschine, umfassend:
eine drehbar gelagerte Welle (5);
einen Ankerkern (6), der an der Welle befestigt ist und eine Vielzahl von Schlitzen an einem äußeren Umfang davon aufweist;
eine Vielzahl von Unterschicht-Spulenblöcken (140), die jeweils in den Schlitzen angeordnet sind;
eine Vielzahl von Unterschicht-Spulenenden (141), welche sich radial jeweils von einem Ende der Unterschicht-Spulenblöcke zu einer inneren, umfänglichen Seite des Ankerkernes entlang einer axialen Endoberfläche des Ankerkernes erstrecken und jeweils Vorsprünge (142) aufweisen, welche sich in der axialen Richtung des Ankerkernes von radial inneren Enden der Unterschicht-Spulenenden erstrecken;
eine Vielzahl von Oberschicht-Spulenblöcken (150), welche jeweils in den Schlitzen angeordnet sind und über jeweils Unterschicht-Spulenblöcken liegen;
eine Vielzahl von Oberschicht-Spulenenden (151), welche sich radial von jeweils einem Ende der Oberschicht-Spulenblöcke zu einer inneren, umfänglichen Seite des Ankerkernes entlang der Unterschicht-Spulenenden erstrecken und jeweils Vorsprünge (152) aufweisen, welche sich in der axialen Richtung des Ankerkernes von radial-inneren Enden der Oberschicht-Spulenenden erstrecken;
wobei die Vorsprünge der jeweiligen Unterschicht-Spulenenden und die Vorsprünge der jeweiligen Oberschicht-Spulenenden elektrisch verbunden sind, um eine Ankerwicklung zu bilden; und
ein ringförmiges Element (7), das mit äußeren Umfängen der Vorsprünge der Oberschicht-Spulenenden in Eingriff steht, um einen Verbindungsabschnitt (21) zwischen den Vorsprüngen der Unterschicht-Spulenenden und der Oberschicht-Spulenenden vom Verschieben nach außen in die radiale Richtung des Ankerkernes zurückzuhalten,
wobei das ringförmige Element (7) an einem inneren Umfang davon konkave (7a) und konvexe (7b) Flächenabschnitte zur Positionierung des Verbindungsabschnittes (21) in umfänglicher Richtung des Ankerkernes (6) aufweist.

2. Elektrische Antriebsmaschine nach Anspruch 1, worin die konkaven (7a) und konvexen (7b) Flächenabschnitte auf der gesamten inneren umfänglichen Oberfläche des ringförmigen Elementes (7) ausgebildet sind.

3. Elektrische Antriebsmaschine nach Anspruch 1 oder 2, worin: das ringförmige Element (7) eine Vielzahl von Vorsprüngen aufweist, welche sich gegen eine axiale Endoberfläche des Ankerkernes erstrecken und in Lücken zwischen angrenzenden zwei von Oberschicht-Spulenenden in der umfänglichen Richtung des Ankerkernes eingeführt sind, um die Oberschicht-Spulenenden in Position zu bringen.

4. Elektrische Antriebsmaschine nach jedem der Ansprüche 1 bis 3, welche des weiteren einen Kragen (8) umfaßt, der das ringförmige Element hält.

5. Elektrische Antriebsmaschine nach Anspruch 4, worin: der Kragen (8) das ringförmige Element in einem zustand hält, in welchem das ringförmige Element gegen die Oberschicht-Spulenenden gepreßt ist.

6. Elektrische Antriebsmaschine nach jedem der Ansprüche 1 bis 5, welche des weiteren eine Bürste (4) umfaßt, welche radial außen von dem ringförmigen Element in gleitbarem Kontakt mit den Oberschicht-Spulenden zur Kommutation von elektrischer Energie vorgesehen ist.

## Revendications

1. Machine tournante électrique comprenant :
un arbre (5) supporté avec possibilité de rotation,
un noyau d'induit (6) fixé à l'arbre et comportant une pluralité de fentes sur une périphérie externe de celui-ci,
une pluralité de corps de bobinage de couche inférieure (140) logés respectivement dans les fentes,
une pluralité d'extrémités de bobinage de couche inférieure (141) s'étendant radialement à partir de premières extrémités des corps de bobinage de couche inférieure, respectivement, vers une face périphérique externe du noyau d'induit suivant une surface d'extrémité axiale du noyau d'induit et présentant des saillies respectives (142) s'étendant suivant la direction axiale du noyau d'induit depuis des extrémités radialement internes des extrémités de bobinage de couche inférieure,
une pluralité de corps de bobinage de couche supérieure (150) logés respectivement dans les fentes et situés au-dessus des corps de bobinage de couche inférieure, respectivement,
une pluralité d'extrémités de bobinage de couche supérieure (151) s'étendant radialement à partir de premières extrémités des corps de bobinage de couche supérieure, respectivement, vers la face périphérique interne du noyau d'induit le long des extrémités de bobinage de couche inférieure et présentant des saillies respectives (152) s'étendant suivant la direction axiale du noyau d'induit à partir d'extrémités radialement internes des extrémités de bobinage de couche supérieure,
les saillies des extrémités de bobinage de couche inférieure respectives et les saillies des extrémités respectives de bobinage de couche supérieure étant reliées électriquement afin de former un enroulement d'induit, et
un élément annulaire (7) en prise avec les périphéries externes des saillies des extrémités de bobinage de couche supérieure afin d'empêcher une partie de liaison (21) entre les saillies des extrémités de bobinage de couche inférieure et les extrémités de bobinage de couche supérieure de se déplacer vers l'extérieur suivant la direction radiale du noyau d'induit,
dans laquelle l'élément annulaire (7) comporte, sur une périphérie interne de celui-ci, des parties concaves (7a), t des parties convexes (7b) destinées à positionner la partie de liaison (21) suivant la direction de la circonférence du noyau d'induit (6).

2. Machine tournante électrique selon la revendication 1, dans laquelle les parties concaves (7a) et les parties convexes (7b) sont formées sur la surface périphérique interne entière de l'élément annulaire (7).

3. Machine tournante électrique selon la revendication 1 ou 2, dans laquelle :
l'élément annulaire (7) comporte une pluralité de saillies s'étendant en direction de la première surface d'extrémité axiale du noyau d'induit et insérées dans des interstices entre deux extrémités adjacentes parmi les extrémités de bobinage de couche supérieure suivant la direction de la circonférence du noyau d'induit afin de placer les extrémités de bobinage de couche supérieure en position.

4. Machine tournante électrique selon l'une quelconque des revendications 1 à 3, comprenant en outre :
un collier (8) maintenant l'élément annulaire.

5. Machine tournante électrique selon la revendication 4, dans laquelle :
le collier (8) maintient l'élément annulaire dans un état dans lequel l'élément annulaire est pressé contre les extrémités de bobinage de couche supérieure.

6. Machine tournante électrique selon l'une quelconque des revendications 1 à 5, comprenant en outre :
un balai (4) disposé radialement à l'extérieur de l'élément annulaire, en contact glissant avec les extrémités de bobinage de couche supérieure en vue de la collecte d'énergie électrique.
